# FASCICULE DE BREVET EUROPEEN

(11) **EP 1 938 950 B1**
(45) Date de publication et mention de la délivrance du brevet: **24.11.2010**
(21) Numéro de dépôt: 07301690.9
(22) Date de dépôt: 18.12.2007
(51) Int. Cl.: B29C 57/04, B21D 41/02

(54) **Dispositif d'outil à expansion pour pince sur machine à réaliser des emboîtures aux extrémités de tuyaux en matière plastique ou composite**
Vorrichtung für Aufdehnwerkzeug für Zange auf der Maschine, zum Ausführen von Fugen an den Endstücken von Plastik- oder Verbundrohren
Bulging die device for clips on a machine for making sockets on the ends of pipes made from plastic or composite material.

(30) Priorité: 28.12.2006 FR 0656030
(43) Date de publication de la demande: 02.07.2008
(60) Demande divisionnaire: 10167251.7
(73) Titulaire: Virax, SAS, 51200 Epernay (FR)
(72) Inventeur: Gueit, Aurélien, F-69008 Lyon (FR)
(74) Mandataire: Rhein, Alain

(56) Documents cités:
- EP-A- 0 718 057
- EP-A1- 0 878 287
- JP-A- 57 009 541
- JP-A- 2002 035 869

## Description

La présente invention a pour objet un dispositif d'outil à expansion pour pince ou machine à réaliser des emboîtures aux extrémités de tuyaux en matière plastique, ou en matériau composite de type appelé communément multi-couches, utilisés dans le domaine de la plomberie, ainsi qu'il est connu de JP-A-57,009541.

De manière connue une emboîture, que ce soit sur un tuyau en cuivre ou un tuyau en matière plastique ou composite, est réalisée au moyen d'une pince manuelle ou d'une machine, à emboîture munie d'un outil à expansion qui comprend un embout de forme cylindrique constitué du rapprochement de plusieurs mors en forme de secteur et mobiles dans le sens radial. Le rapprochement des branches de pince, ou l'actionnement de la machine, provoque le déplacement axial d'une aiguille conique entre lesdits mors, entraînant l'écartement de ceux-ci.

Une emboîture sur un tuyau en matière plastique ou composite n'est pas tout à fait réalisée comme une emboîture sur un tube en cuivre recuit. En effet, il convient d'évaser suffisamment largement l'extrémité du tuyau pour permettre l'emboîtement avant reprise de forme. Par ailleurs, pour des raisons évidentes de résistance, l'épaisseur de la paroi du tuyau augmente avec le diamètre de celui-ci, et plus l'épaisseur augmente, plus le retour élastique est rapide, ce qui nécessite un évasement plus important.

Or, lors de l'expansion, les mors s'écartent les uns des autres ce qui crée entre eux des gorges dans lesquelles pénètre la matière en sorte de créer des boursouflures internes. Cette déformation entraîne un emboîtement imparfait susceptible de générer des fuites.

Pour pallier cet inconvénient, bien qu'il ne soit pas possible d'éliminer totalement la formation de boursouflures, il a été proposé, notamment dans les documents EP0718057 et EP0878287, de travailler les arêtes des mors en sorte de limiter les déformations. Ainsi, dans le premier les arêtes sont cassées par la formation d'un chanfrein ou d'un arrondi, tandis que dans le second la surface de travail de chacun des mors présente au niveau de chacun de ses bords longitudinaux un plat faisant un angle droit avec le côté dudit mors, adjacent à ladite surface de travail.

Toutefois, dans la pratique, pour pallier cet inconvénient, les utilisateurs procèdent à une succession d'évasements, chacun accompagné d'un pivotement axial de l'outil par rapport au tuyau, en sorte qu'à chaque expansion on écrase les boursouflures créées lors de l'expansion précédente, si cela ne permet pas d'éliminer totalement les boursouflures, cela en réduit les effets.

Si cette manière de procéder permet d'utiliser les outils classiques, elle peut se révéler délicate et difficile à réaliser dans certains endroits d'accès limité. Par ailleurs, elle nécessite une certaine attention de la part de l'utilisateur, lequel ne doit pas oublier de faire tourner l'outil, mais également veiller à ce qu'après rotation de l'outil, les mors soient bien disposés en regard des boursouflures créées précédemment. Cette manière de procéder est donc aléatoire et donc susceptible de laisser subsister des risques de fuite.

On notera que l'on connaît également par le document JP 57 009541 un outil à expansion dont l'aiguille conique est pourvue de gorges hélicoïdales avec lesquelles coopèrent des ergots que comportent sur leur face interne les mors, en sorte que le déplacement axial de ladite aiguille provoque non seulement l'écartement radial desdits mors, mais également leur rotation axiale. L'évasement est donc obtenu par deux mouvements conjugués d'écartement et de rotation ce qui nécessite d'une part des moyens spéciaux de maintien du tube pour l'empêcher de tourner, et des moyens moteurs puissants, en l'occurrence hydrauliques, pour, lors du déplacement radial de l'aiguille conique, transmettre un mouvement de rotation aux mors. Le déplacement radial est donc toujours associé à une rotation axiale, que ce soit lors de l'écartement ou du resserrement des mors. Par ailleurs, un tel outil nécessite que l'aiguille de l'outil ainsi que les mors, soient de conception particulière, alors que l'un des buts de l'invention est de permettre l'utilisation de mors de conception classique.

La présente invention a pour but de proposer un dispositif d'outil à expansion permettant de remédier aux divers inconvénients précités, notamment en ce qu'il permet d'obtenir, indépendamment de la forme des mors, un évasement de l'extrémité d'un tube pratiquement sans boursouflures, en sorte de ne pas générer de risques de fuite, tout en permettant un gain de temps.

Le dispositif d'outil à expansion pour pince ou machine à réaliser des emboîtures aux extrémités de tuyaux en matière plastique ou composite, utilisés dans le domaine de la plomberie selon l'invention, est du type comprenant un embout de forme cylindrique constitué du rapprochement de plusieurs mors en forme de secteur et mobiles dans le sens radial sous l'effet de l'insertion entre eux d'une aiguille conique mobile en translation axiale par l'actionnement de ladite pince ou machine, qui permet que lesdits mors passent d'une position resserrée à une position écartée, et il se caractérise en ce qu'il comporte, de manière intégrée ou bien dans un ensemble prévu apte à s'intercaler entre ledit embout et ladite pince ou machine, des moyens prévus aptes, lors de la phase où ledit embout passe de la position écartée à la position resserrée, à entraîner automatiquement ledit embout, directement ou indirectement, en pivotement axial selon une portion de tour pour prendre une position angulaire différente, le déplacement angulaire dudit embout étant choisi en fonction du nombre de mors, en sorte qu'après un pivotement, et même plusieurs successifs, lesdits mors ne reprennent pas une position occupée précédemment par un autre.

Auprès la phase d'expansion, lors du retour en position resserrée, l'embout pivote axialement automatiquement pour prendre une position angulaire différente, en sorte que l'utilisateur peut effectuer une seconde expansion sans avoir à rechercher une position adéquate de l'embout.

Selon une caractéristique additionnelle du dispositif d'outil à expansion selon l'invention, les moyens prévus aptes à entraîner automatiquement l'embout en pivotement consistent en des moyens de transformation d'un mouvement de translation en un mouvement de rotation.

Selon une autre caractéristique additionnelle du dispositif d'outil à expansion selon l'invention, les moyens de transformation d'un mouvement de translation en un mouvement de rotation consistent en un système à came, intercalé entre, directement ou indirectement, l'aiguille conique et l'embout.

Selon une autre caractéristique additionnelle du dispositif d'outil à expansion selon l'invention, les moyens prévus aptes à entraîner automatiquement l'embout en pivotement, sont conçus aptes à faire tourner ledit embout d'un angle d'une valeur différente de celle de l'angle que fait chacun des secteurs constituant les mors.

Selon un mode de réalisation préférentiel du dispositif d'outil à expansion selon l'invention, lorsqu'il comporte six mors, les moyens prévus aptes à entraîner automatiquement l'embout en pivotement, sont conçus aptes à faire tourner ledit embout d'un angle de 40°.

Selon un mode de réalisation particulier du dispositif d'outil à expansion selon l'invention, l'embout est solidaire en rotation d'une couronne mobile en rotation, qui porte au moins un pion d'axe radial engagé dans le chemin de came d'une came tambour liée à l'aiguille conique et se déplaçant avec cette dernière.

Selon une caractéristique additionnelle du mode de réalisation particulier du dispositif d'outil à expansion selon l'invention, la came tambour est creusée périphériquement d'un chemin de came défini par une succession, en alternance, de gorges longitudinales et de gorges diagonales; en ce que du côté des mors chacune desdites gorges diagonales débouche dans une gorge longitudinale à un même niveau, tandis que de l'autre côté, chacune desdites gorges longitudinales débouche dans une gorge diagonales qui est en cet endroit plus profonde, créant ainsi un épaulement diagonal; et en ce que le ou les pions suiveurs sont de longueur extensible en sorte de rester au contact dudit fond du chemin de came.

Le dispositif d'outil à expansion selon l'invention permet également de s'affranchir de l'utilisation de mors présentant un profil particulier, tels que ceux évoqués précédemment et décrits dans les documents EP0718057 et EP0878287, en sorte qu'il est possible d'utiliser des mors classiques.

On notera que l'outil à expansion selon l'invention peut se présenter sous différentes formes, ainsi il peut se présenter sous la forme d'un ensemble en plusieurs parties solidarisables, telles qu'une partie incorporant les mors et une partie incorporant les moyens de transformation d'un mouvement de translation en un mouvement de rotation.

La partie incorporant les moyens de transformation d'un mouvement de translation en un mouvement de rotation peut ainsi être conçue apte à recevoir un outil à expansion de type classique, ladite partie consistant alors en un élément intermédiaire faisant l'interface entre ledit outil et la pince ou la machine.

On notera que cette partie incorporant les moyens de transformation d'un mouvement de translation en un mouvement de rotation peut également faire partie intégrante de la pince ou de la machine.

Les avantages et les caractéristiques du dispositif d'outil à expansion selon l'invention, ressortiront plus clairement de la description qui suit et qui se rapporte au dessin annexé, lequel en représente un mode de réalisation non limitatif.

Dans le dessin annexé :
- la figure 1 représente une vue schématique en coupe selon un plan longitudinal médian d'un dispositif d'outil à expansion selon l'invention.
- la figure 2 représente une vue schématique en coupe selon un plan longitudinal médian du même dispositif d'outil à expansion, dans une configuration différente d'utilisation.
- la figure 3 représente une vue schématique en perspective et en éclaté du même dispositif.
- les figures 4a, 4b et 4c représentent des vues schématiques partielles en coupe transversale d'un tube lors de sont évasement avec un dispositif d'expansion selon l'invention.

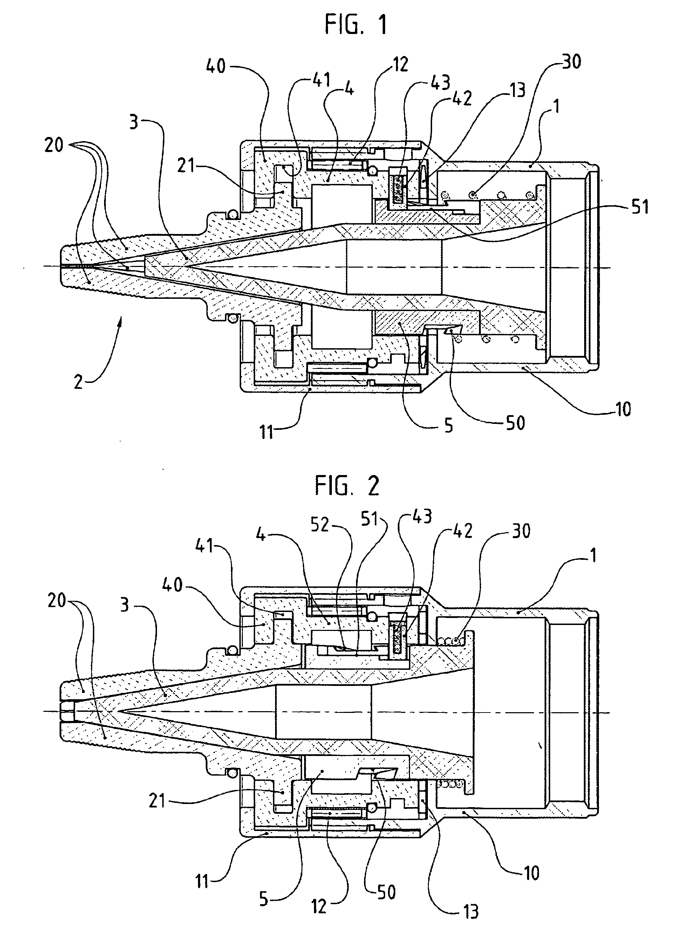

En référence aux figures 1, 2 et 3, on peut voir qu'un dispositif d'outil à expansion pour réaliser des emboîtures aux extrémités de tuyaux ou tubes en matière plastique ou composite selon l'invention, comprend un corps 1 réalisé en l'occurrence en deux parties, une partie fixe 10 destinée à être fixée par vissage à un outil, non représenté, tel qu'une pince ou une machine à réaliser des emboîtures, et une partie amovible 11, faisant office de capot, assemblée par vissage à la partie fixe 10.
Le corps 1 renferme, de manière connue, un embout 2 destiné à être introduit dans l'extrémité d'un tube à évaser, et constitué du rapprochement de plusieurs mors 20 en forme de secteurs. Le corps 1 renferme également, de manière classique, une aiguille conique 3, mobile axialement sous l'actionnement de l'outil, en sorte de pouvoir s'insérer entre les mors 20 et ainsi les écarter chacun dans un sens radial, et rappelée par un ressort 30.

Selon l'invention, le dispositif d'outil comprend une couronne 4, mobile en pivotement axial à l'intérieur du corps 1 par l'intermédiaire de roulements 12 et 13, et qui maintient les mors 20 tout en autorisant leur mouvement radial. Ainsi la couronne mobile 4 comporte une partie annulaire 40 comprenant une gorge périphérique interne 41, tandis que chacun des mors 20 présente extérieurement une portion de collerette 21 qui, après rapprochement des mors 20, forme une collerette qui loge dans la gorge interne 41.

Les mors 20 sont de plus liés en rotation à la couronne mobile 4, ce qui est réalisé au travers de moyens de guidage radiaux. Ainsi, par exemple, chaque mors 20 comporte dans sa portion de collerette 21 une fente radiale, tandis que la partie annulaire 40 comporte des goupilles qui traversent transversalement la gorge interne 41 et engagées chacune dans une fente radiale. Chaque mors 20 peut ainsi se déplacer radialement par rapport à la couronne 4 en étant guidé par la fente et la goupille.

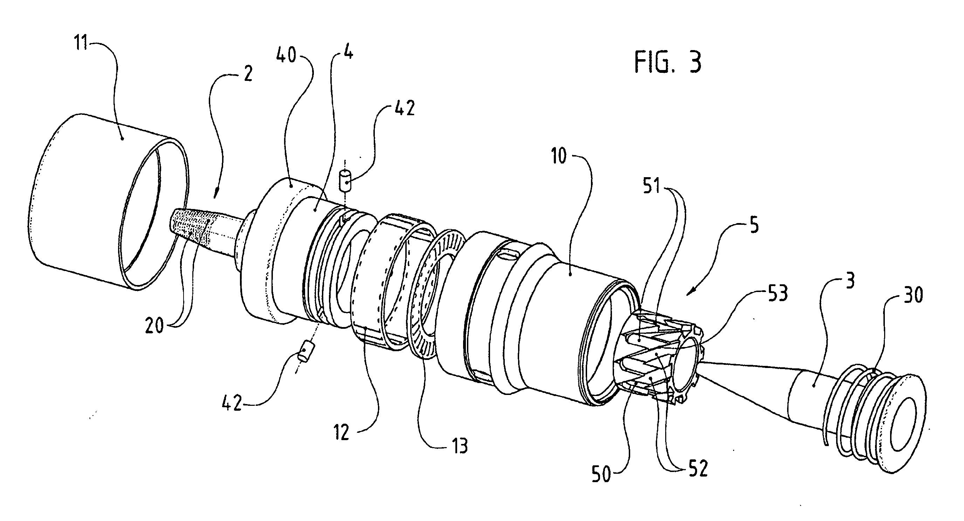

Egalement selon l'invention, sur l'aiguille conique 3 est enfilée et solidarisée une came tambour 5 qui coopère avec des pions suiveurs 42 solidaires de la couronne mobile 4, dont un seul est visible sur chacune des figures 1 et 2. La came tambour 5 est creusée périphériquement d'un chemin de came 50 défini, comme cela est visible sur la figure 3, par une succession, en alternance, de gorges longitudinales 51 et de gorges diagonales 52, les gorges longitudinales 51 étant de profondeur égale tandis que les gorges diagonales 52 sont de profondeur variable.

On notera que les gorges diagonales 52 peuvent présenter d'autres formes, elles peuvent par exemple être hélicoïdales, l'essentiel étant de joindre l'extrémité d'une gorge longitudinale 51 à l'extrémité opposée d'une gorge longitudinale 51 voisine.

La liaison entre les gorges longitudinales 51 et les gorges diagonales 52 est réalisée de la manière suivante, du côté des mors 20 chaque gorge diagonale 52 débouche dans une gorge longitudinale 51 à un même niveau, tandis que de l'autre côté, la gorge longitudinale 51 débouche dans la gorge diagonale 52 qui est cet endroit plus profonde, créant ainsi un épaulement diagonal 53.

Par ailleurs les pions suiveurs 42 sont extensibles sous l'action d'un ressort 43, en sorte qu'ils demeurer au contact du chemin de came 50.

En fonctionnement, en position stable, c'est-à-dire lorsque l'aiguille conique 3 est maintenue écartée des mors 20 sous l'effet du ressort 30, comme cela est représenté sur la figure 1, chacun des pions suiveurs 42 est engagé dans une gorge longitudinale 51, du côté des mors 20. Lors de la réalisation d'une expansion, c'est-à-dire lorsque l'on exerce une poussée sur l'aiguille conique 3 pour forcer l'écartement des mors 20, la came 5 se déplace axialement et, de manière relative, chacun des pions suiveurs 42 se déplace dans une gorge longitudinale 51. En extrémité de la gorge longitudinale 51, le pion suiveur 42 franchit l'épaulement 53 et tombe dans une gorge diagonale 52. Lors du relâchement de la pression sur l'aiguille conique 3 pour le retour en position stable, le ressort 30 rappelle l'aiguille conique 3 qui entraîne la came 5 et, de manière relative, chacun des pions suiveurs 42, vient buter contre l'épaulement 53 et s'engage dans une gorge diagonale 52, provoquant ainsi le pivotement de la couronne mobile 4 et donc des mors 20 qui lui sont liés.

Après chaque expansion les mors 20 sont entraînés automatiquement en pivotement. L'utilisateur peut donc réaliser une succession rapide de plusieurs expansions, sans avoir à se soucier du positionnement des mors 20, puisque ceux-ci seront obligatoirement dans une position différente, dans la mesure où l'utilisateur n'a pas fait varier la position de l'outil par rapport au tube.

L'outil à expansion selon l'invention permet un gain important de temps, tout en garantissant un résultat très satisfaisant, puisque la rotation est automatique.

Le déplacement angulaire de l'embout 2, est bien entendu choisi en fonction du nombre de mors 20, en sorte qu'après un pivotement, et même plusieurs successifs, les mors 20 ne reprennent pas une position occupée précédemment par un autre. Dans le mode de réalisation représenté, les mors 20 sont au nombre de six, et l'architecture de la came 5 permet à chaque opération un pivotement de 1/9^{ème} de tour.

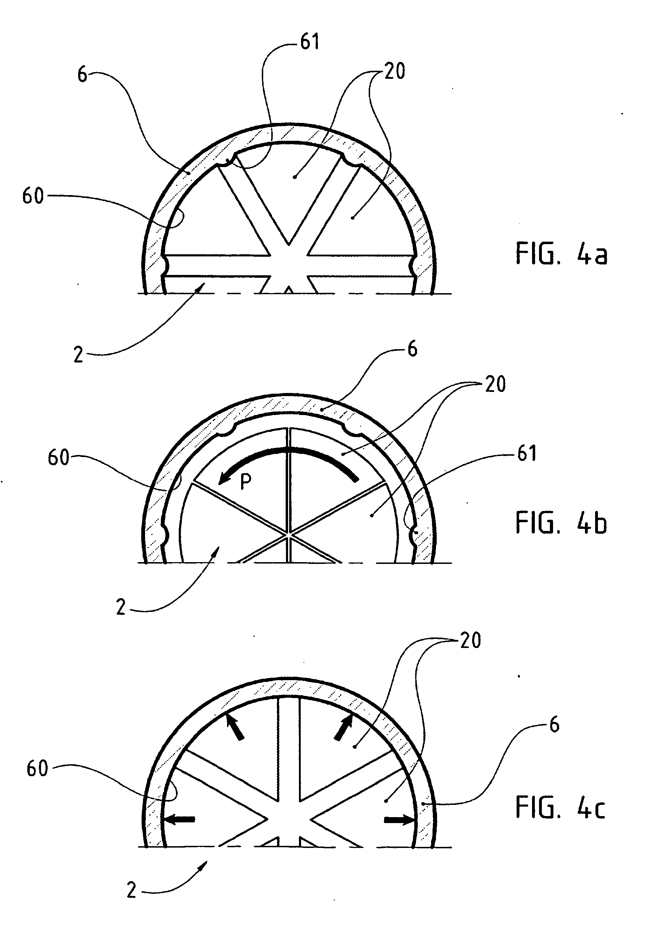

D'autres rapports sont bien entendu possibles, ainsi on peut voir sur les figures 4a, 4b et 4c, des opérations successives de l'évasement d'un tube 6 au moyen d'un outil à expansion comprenant un embout 2 de six mors, et dont la came, non représentée, est conçue apte à effectuer à chaque retour, un pivotement de 1/12^{ème} de tour.

Sur la figure 4a, on peut voir que lors de la première expansion des mors 20, il se crée entre chacun eux sur la parois interne 60 du tube 6, des boursouflures 61.

Lors du relâchement de l'outil, figure 4b, les mors 20 retournent en position initiale resserrée, ce qui s'accompagne d'un pivotement P d'une valeur de 1/12^{ème} de tour, en sorte qu'ils se placent chacun au droit d'une boursouflure 61, et que lors de l'expansion suivante, figure 4c, les mors 20 écrasent les boursouflures 61.

Dans le mode de réalisation représenté, la came 5 est portée par l'aiguille conique 3, tandis que les pions suiveurs 42 sont solidaires de l'embout 2, on notera toutefois que l'inverse est parfaitement envisageable, mais plus complexe à mettre en oeuvre, notamment en ce qui concerne la came dont le chemin de came doit alors être interne.

Selon une autre forme de réalisation, sur la couronne mobile 4, la partie annulaire 40 et l'embout 2 sont remplacés par un moyen d'assujettissement, par vissage par exemple, d'un outil à expansion de type classique, le corps 1 qui renferme alors le reste de la couronne mobile 4 et la came 5 est dans ce cas soit monté à demeure sur la pince ou la machine à réaliser les emboîtures, soit prévu pour constituer un élément interface entre un outil à expansion classique et une pince ou machine à réaliser les emboîtures.

## Revendications

1. Dispositif d'outil à expansion pour pince ou machine à réaliser des emboîtures aux extrémités de tuyaux (6) en matière plastique ou composite, utilisés dans le domaine de la plomberie, du type comprenant un embout (2) de forme cylindrique constitué du rapprochement de plusieurs mors (20) en forme de secteur et mobiles dans le sens radial sous l'effet de l'insertion entre eux d'une aiguille conique (3) mobile en translation axiale par l'actionnement de ladite pince ou machine, qui permet que lesdits mors (20) passent d'une position resserrée à une position écartée, **caractérisé en ce que** le dispositif d'outil, qui se présente sous une forme intégrée comportant ledit embout, ou sous la forme d'un élément monté à demeure sur la pince ou la machine à réaliser les emboîtures, comporte des moyens (4, 42, 5) prévus aptes, lors de la phase où ledit embout (2) passe de la position écartée à la position resserrée, à entraîner automatiquement ledit embout (2), directement ou indirectement, en pivotement axial selon une portion de tour pour prendre une position angulaire différente, le déplacement angulaire dudit embout (2) étant choisi en fonction du nombre de mors (20), en sorte qu'après un pivotement, et même plusieurs successifs, lesdits mors (20) ne reprennent pas une position occupée précédemment par un autre.

2. Dispositif d'outil à expansion selon la revendication 1, **caractérisé en ce que** les moyens (4, 42, 5) prévus aptes à entraîner automatiquement l'embout (2) en pivotement consistent en des moyens de transformation d'un mouvement de translation en un mouvement de rotation.

3. Dispositif d'outil à expansion selon la revendication 2, **caractérisé en ce que** les moyens de transformation d'un mouvement de translation en un mouvement de rotation consistent en un système à came (5, 42), intercalé entre, directement ou indirectement, l'aiguille conique (3) et l'embout (2).

4. Dispositif d'outil à expansion selon l'une quelconque des revendications précédentes, **caractérisé en ce que** les moyens prévus aptes à entraîner automatiquement l'embout (2) en pivotement, sont conçus aptes à faire tourner ledit embout (2) d'un angle d'une valeur différente de celle de l'angle que fait chacun des secteurs constituant les mors (20).

5. Dispositif d'outil à expansion selon la revendication 4, **caractérisé en ce que** lorsqu'il comporte six mors (20), les moyens (4, 42, 5) prévus aptes à entraîner automatiquement l'embout (2) en pivotement, sont conçus aptes à faire tourner ledit embout (2) d'un angle de 40°.

6. Dispositif d'outil à expansion selon l'une quelconque des revendications précédentes, **caractérisé en ce que** l'embout (2) est solidaire en rotation d'une couronne (4) mobile en rotation, qui porte au moins un pion suiveur (42) d'axe radial engagé dans le chemin de came (50) d'une came tambour (5) liée à l'aiguille conique (3) et se déplaçant avec cette dernière.

7. Dispositif selon la revendication 6, **caractérisé en ce** la came tambour (5) est creusée périphériquement d'un chemin de came (50) défini par une succession, en alternance, de gorges longitudinales (51) et de gorges diagonales (52); en ce que du côté des mors (20) chacune desdites gorges diagonales (52) débouche dans une gorge longitudinale (51) à un même niveau, tandis que de l'autre côté, chacune desdites gorges longitudinales (51) débouche dans une gorge diagonale (52) qui est en cet endroit plus profonde, créant ainsi un épaulement diagonal (53); et en ce que le ou les pions suiveurs (42) sont de longueur extensible en sorte de rester au contact du fond dudit chemin de came (50).

8. Dispositif selon la revendication 6 ou la revendication 7, **caractérisé en ce que** la couronne mobile (4) comporte une partie annulaire (40) comprenant une gorge périphérique interne (41) qui loge une portion de collerette (21) que comporte chacun des mors (20), tandis que des moyens de guidage radiaux lient en rotation lesdits mors (20) et ladite couronne mobile (4).

## Claims

1. Expansion tool device for pliers or machine for producing sockets at the ends of pipes (6) made out of plastic or composite material, used in the field of plumbing, of the type including a cylindrically-shaped ferrule (2) formed by the tightening of several sector-shaped chucks (20) movable in the radial direction under the action of the insertion between them of a tapered needle (3) movable in axial translation by actuating said pliers or machine, which allows said chucks (20) to pass from a tightened position to a separated position, wherein the tool device, which is in an integrated form including said ferrule, or in the form of an element permanently mounted on the pliers or the machine for producing the sockets, includes means (4, 42, 5) designed capable, during the phase in which said ferrule (2) passes from the separated position to the tightened position, of automatically driving said ferrule (2), directly or indirectly, in axial swivelling according to a portion of a turn in order to adopt a different angular position, the angular displacement of said ferrule (2) being chosen depending on the number of chucks (20), so that, after a swivelling, and even several successive ones, said chucks (20) do not return into a position previously adopted by another one.

2. Expansion tool device according to claim 1, wherein the means (4, 42, 5) designed capable of automatically driving the ferrule (2) in swivelling consist of means for transforming a translatory motion into a rotational motion.

3. Expansion tool device according to claim 2, wherein the means for transforming a translatory motion into a rotational motion consist of a cam system (5, 42) directly or indirectly intercalated between the tapered needle (3) and the ferrule (2).

4. Expansion tool device according to any of the preceding claims, wherein the means designed capable of automatically driving the ferrule (2) in swivelling are designed capable of rotating said ferrule (2) according an angle of a value different from that of the angle according to which moves each sector the chucks (20) are comprised of.

5. Expansion tool device according to claim 4, wherein, when it comprises six chucks (20), the means (4, 42, 5) designed capable of automatically driving the ferrule (2) in swivelling are designed capable of causing said ferrule (2) to rotate according to an angle of 40°.

6. Expansion tool device according to any of the preceding claims, wherein the ferrule (2) is integral in rotation with a crown (4) movable in rotation, which carries at least one catch follower (42) with a radial axis inserted in the cam path (50) of a cylindrical cam (5) connected to the tapered needle (3) and moving with the latter.

7. Device according to claim 6, wherein the cylindrical cam (5) is peripherally provided with a cam path (50) defined by a series of alternating longitudinal grooves (51) and diagonal grooves (52); wherein on the side of the chucks (20) each of said diagonal grooves (52) ends into a longitudinal groove (51) at one and the same level, while on other side, each of said longitudinal grooves (51) ends into a diagonal groove (52), which is deeper at this location, thus creating a diagonal shoulder (53); and wherein the catch followers (42) have an extensible length so as to remain into contact with the bottom of said cam path (50).

8. Device according to claim 6 or claim 7, wherein the movable crown (4) comprises an annular portion (40) including an internal peripheral groove (41), which accommodates a portion of a flange (21) each chuck (20) comprises, while radial guiding means connect in rotation said chucks (20) and said movable crown (4).

## Patentansprüche

1. Dehnungswerkzeugvorrichtung für eine Aufweitzange zum Formen von Muffen an den Enden von Rohren (6) aus Kunststoff oder Verbundmaterial, die auf dem Gebiet der Klempnerarbeit verwendet werden, der Art umfassend ein zylinderförmiges Endstück (2), das aus der Annäherung von mehreren sektorförmigen Spannbacken (20) besteht, die radial beweglich sind unter der Wirkung der Einführung zwischen ihnen einer kegelförmigen Nadel (3), die durch Betätigung der besagten Zange oder Maschine axial translationsbeweglich ist, die es erlaubt, dass die besagten Spannbacken (20) von einer angenäherten Lage in eine gespreizte Lage übergehen, **dadurch gekennzeichnet dass** sich die Werkzeugvorrichtung integriert ausgestaltet ist und das besagte Endstück umfasst, oder als ein fest auf der Zange oder Maschine zum Formen von Muffen montiertes Element ausgestaltet ist, dass die Mittel (4, 42, 5) umfasst, die geeignet vorgesehen sind, um während derjenigen Phase, in der das besagte Endstück (2) von der gespreizten Lage in die angenäherte Lage übergeht, das besagte Endstück (2) direkt oder indirekt automatisch in axialer Kippbewegung gemäß einer Teilumdrehung anzutreiben, damit es eine unterschiedliche Winkellage einnimmt, wobei die Winkelverschiebung des besagten Endstücks (2) abhängig von der Zahl der Spannbacken (20) so gewählt wird, dass die besagten Spannbacken (20) nach einer Kippbewegung, sogar nach mehreren aufeinander folgenden Kippbewegungen, keine Lage einnehmen, die zuvor von einem anderen eingenommen war.

2. Dehnungswerkzeugvorrichtung nach Anspruch 1, **dadurch gekennzeichnet, dass** die Mittel (4, 42, 5), die geeignet vorgesehen sind, um das Endstück (2) automatisch in Kippbewegung anzutreiben, aus Mitteln bestehen, um eine Translationsbewegung in eine Drehbewegung umzuwandeln.

3. Dehnungswerkzeugvorrichtung nach Anspruch 2, **dadurch gekennzeichnet, dass** die Mittel, um eine Translationsbewegung in eine Drehbewegung umzuwandeln, aus einem Nockensystem (5, 42) bestehen, das direkt oder indirekt zwischen der kegelförmigen Nadel (3) und dem Endstück (2) zwischengefügt ist.

4. Dehnungswerkzeugvorrichtung nach irgendeinem der vorgehenden Ansprüche, **dadurch gekennzeichnet, dass** die Mittel, die geeignet vorgesehen sind, um das Endstück (2) automatisch in Kippbewegung anzutreiben, geeignet vorgesehen sind, um das besagte Endstück (2) gemäß einen Winkel eines Wertes, der von demjenigen des Winkels, der jeder der die Spannbacken (20) bildenden Sektoren einschließt, unterschiedlich ist, drehen zu lassen.

5. Dehnungswerkzeugvorrichtung nach Anspruch 4, **dadurch gekennzeichnet, dass**, wenn sie sechs Spannbacken (20) umfasst, die Mittel (4, 42, 5), die geeignet vorgesehen sind, um das Endstück (2) automatisch in Kippbewegung anzutreiben, geeignet vorgesehen sind, um das besagte Endstück (2) gemäß einen Winkel von 40° drehen zu lassen.

6. Dehnungswerkzeugvorrichtung nach irgendeinem der vorgehenden Ansprüche, **dadurch gekennzeichnet, dass** das Endstück (2) drehfest mit einer drehbeweglichen Krone (4) verbunden ist, die wenigstens einen Mitlaufstift (42) mit radialer Achse trägt, die in der Nockenbahn (50) eines Trommelnockens (5), der mit der kegelförmigen Nadel (3) verbunden ist, eingeführt ist und sich mit dieser letzteren verschiebt.

7. Dehnungswerkzeugvorrichtung nach Anspruch 6, **dadurch gekennzeichnet, dass** der Trommelnocken (5) am Umkreis mit einer Nockenbahn (50) ausgehohlt ist, die von einer abwechselnden Reihe von Längsnuten (51) und Diagonalnuten (52) definiert ist; dadurch, dass an der Seite der Spannbacken (20) jede der besagten Diagonalnuten (52) auf einer selben Ebene in eine Längsnut (51) ausmündet, während an der anderen Seite jede der besagten Längsnuten (51) in eine Diagonalnut (52) ausmündet, die an dieser Stelle tiefer ist, wodurch also einen Diagonalansatz (53) gebildet wird; und dadurch, dass der oder die Mitlaufstifte (42) einer verstellbaren Länge sind, so dass sie mit dem Boden der besagten Nockenbahn (50) in Berührung bleiben.

8. Dehnungswerkzeugvorrichtung nach Anspruch 6 oder Anspruch 7, **dadurch gekennzeichnet, dass** die bewegliche Krone (4) einen ringförmigen Teil (40) umfasst, der eine innere Umkreisnut (41) umfasst, die einen Kragenteil (21) aufnimmt, welcher jeder der Spannbacken (20) umfasst, während radiale Führungsmittel die besagten Spannbacken (20) und die besagte bewegliche Krone (4) in Drehung verbinden.
